# EUROPÄISCHE PATENTSCHRIFT

(11) **EP 1 982 816 B1**
(45) Veröffentlichungstag und Bekanntmachung des Hinweises auf die Patenterteilung: **16.11.2011**
(21) Anmeldenummer: 08100720.5
(22) Anmeldetag: 22.01.2008
(51) Int. Cl.: B29C 35/08, B29C 67/00, C08K 7/28, C08J 3/12, C08L 77/00

(54) **Komposit-Pulver, Verwendung in einem formgebenden Verfahren und Formkörper, hergestellt aus diesem Pulver**
Composite powder, its use in a moulding method and moulds made of this composite powder
Poudre composite, utilisation dans un procédé de formage et corps de formage fabriqué à partir de cette poudre

(30) Priorität: 20.04.2007 DE 102007019133
(43) Veröffentlichungstag der Anmeldung: 22.10.2008
(73) Patentinhaber: Evonik Degussa GmbH, 45128 Essen (DE)
(72) Erfinder: Simon, Ulrich, 44625 Herne (DE); Monsheimer, Sylvia, 45721 Haltern am See (DE); Grebe, Maik, 44805 Bochum (DE); Altkemper, Stefan, 46282 Dorsten (DE)

(56) Entgegenhaltungen:
- WO-A-96/06881
- WO-A-96/30195
- WO-A-2005/082979

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft ein Komposit-Pulver auf Basis eines pulverförmigen Polymeren mit Glaskugeln, welches Vorteile hinsichtlich Stabilität des Herstellprozesses und der Dichte aufweist, die Verwendung dieses Komposit-Pulvers in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden. Die erfindungsgemäßen Formteile zeigen außerdem weniger Neigung zum Verzug als herkömmliche Formteile.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Im Folgenden werden einige Verfahren beschrieben, mit denen aus dem erfindungsgemäßen Komposit-Pulver erfindungsgemäße Formteile hergestellt werden können, ohne dass die Erfindung darauf beschränkt werden soll.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die PulverPartikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6 136 948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, Ionomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), Ionomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90 % aufweist, ein zahlenmäßiges Mittel des Molekulargewichts Mn von 30 000 bis 500 000 hat und dessen Quotient Mw/Mn im Bereich von 1 bis 5 liegt.

DE 197 47 309 beschreibt die Verwendung eines Polyamid-1 2-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

DE102004003485 beschreibt die Verwendung von Partikeln mit zumindest einer Kavität zur Verwendung in schichtaufbauenden Verfahren, Dabei enthalten alle Partikel zumindest eine Kavität, und die die Kavität enthaltenden Partikeln werden durch den Eintrag elektromagnetischer Energie aufgeschmolzen.

Oben beschriebene Pulver werden manchmal zur Verstärkung mit Glaskugeln versehen. Da dabei erhebliche Anteile an Verstärkungsstoff verwendet werden müssen, um einen Effekt zu erzielen, erhöht sich die Dichte des Bauteils sowie der Pulvermischung deutlich. Des weiteren kommt es beim Handling solcher Pulvermischungen oft zu Entmischungsphänomenen, so dass eine Konstanz der mechanischen Eigenschaften, die mit dem Verstärkungsstoff erreicht werden sollen, nicht immer gegeben ist. Die Bereiche, in denen der Anteil an Glaskugeln zu hoch ist, werden sehr spröde und damit unbrauchbar, die Bereiche, in denen zuwenig Glaskugeln enthalten sind, sind weicher als geplant. Die Entmischung beruht auf der unterschiedlichen Dichte der Polymerpartikel und der Glaskugeln und ist tendenziell bei jedem Transport und Handling der Pulvermischung mehr oder weniger evident. Insbesondere wenn im Rapid Manufacturing das Pulverhandling automatisiert wird, entstehen schwer kontrollierbar abweichende Eigenschaften an den produzierten Bauteilen.

Aufgabe der vorliegenden Erfindung war es deshalb, ein Komposit-Pulver bereitzustellen, welches die Erzeugung von möglichst leichten Formkörpern, die gleichzeitig einen höheren Elastizitätsmodul aufweisen, mit möglichst gut reproduzierbaren Verarbeitungsverfahren ermöglicht. Die übrigen mechanischen Eigenschaften sollen nicht schlechter ausfallen als die eines vergleichbaren Polymerpulvers mit Glaskugeln gemäß dem Stand der Technik. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gefunden, wie in den Ansprüchen beschrieben, dass sich durch die Verwendung von porösen Glaskugeln als Verstärkungsstoff neben einem pulverförmigen Polymer Komposit-Pulver herstellen lassen, aus denen sich Formkörper durch ein schichtweise arbeitendes Verfahren, bei welchem selektiv Bereiche der jeweiligen Pulverschicht aufgeschmolzen werden, produzieren lassen, die Vorteile bezüglich der Dichte und Verzugsneigung aufweisen und dabei bessere Eigenschaften bezüglich der Konstanz der Verarbeitung aufweisen wie aus einem verstärkten Polymerpulver nach dem Stand der Technik, beispielsweise die kommerziell verfügbaren Materialien Duraform GF oder EOSINT 3200 GF. Gegenstand der vorliegenden Erfindung ist deshalb ein Komposit-Pulver zum Verarbeiten in einem schichtweise arbeitenden Verfahren, bei welchem selektiv Bereiche der jeweiligen Schicht aufgeschmolzen werden, welches dadurch gekennzeichnet ist, dass das Pulver zumindest poröse Glaskugeln und ein pulverförmiges Polymer, bevorzugt ein Polyamid, besonders bevorzugt ein Polyamid 11 oder 12, aufweist.

In dem erfindungsgemäßen Verfahren wird das Komposit-Pulver dabei nur teilweise aufgeschmolzen. Der erfindungsgemäße Verstärkungsstoff wird von dem Polymerpulver, welches durch elektromagnetischen Energieeintrag aufgeschmolzen wird, umhüllt, und nach Abkühlen der Polymerkomponente wird ein Formteil gebildet, welches Polymer und darin eingebetteten Verstärkungsstoff, aufweist.

Die Partikel des Verstärkungsstoffes sind dabei ebenso wie die Partikel der Polymerkomponente bevorzugt annähernd rund.

Der mittlere Korndurchmesser der Polymerkomponente liegt zwischen 30 und 120 µm, bevorzugt zwischen 40 und 100 µm und besonders bevorzugt zwischen 45 und 70 µm. Als besonders bevorzugte Ausführung für das Komposit-Pulver hat sich gezeigt, dass der Verstärkungsstoff einen geringeren Partikeldurchmesser als die Polymerkomponente aufweisen sollte. Bevorzugt wird ein Verhältnis mittlerer Durchmesser des Polymerkorns zu mittlerem Korndurchmesser des Verstärkungsgstoffpartikels zwischen 1,5:1 und 10:1, besonders bevorzugt zwischen 1,7:1 und 5:1, und besonders bevorzugt zwischen 2:1 und 3:1.

Der Anteil an Verstärkungsstoff bezogen auf den Anteil an Polymer beträgt dabei gewichtsmäßig zwischen 1:10 bis 20:10, bevorzugt zwischen 2:10 und 15:10, und besonders bevorzugt zwischen 5:10 und 12:10.

Die Dichte des Komposit-Bauteiles wird dabei erfindungsgemäß niedriger als beim Bauteil hergestellt aus Komposit-Pulver gemäß des Standes der Technik. Das hat den Vorteil, dass Teile in Leichtbauweise hergestellt werden können, die trotz der verstärkenden Wirkung nicht gleichzeitig Nachteile bezüglich eines erhöhten Gewichtes auftreten.

Außerdem sind Gegenstand vorliegenden Erfindung Formkörper, hergestellt durch ein schichtweise arbeitendes Verfahren, welches selektiv Bereiche der jeweiligen Schicht aufschmilzt, welche dadurch gekennzeichnet sind, dass sie zumindest ein Polymer sowie einen Verstärkungsstoff, aufweisen und dass dabei die Dichte des erfindungsgemäßen Komposit-Bauteiles gegenüber einem Bauteil hergestellt aus Komposit-Pulver nach dem Stand der Technik, abgesenkt wird. Die Verzugsneigung der erfindungsgemäßen Komposit-Bauteile ist ebenfalls reduziert.

Das erfindungsgemäße Komposit-Pulver hat den Vorteil, dass aus ihm durch ein schichtweise arbeitendes Verfahren, bei dem selektiv Bereiche der jeweiligen Schicht aufgeschmolzen werden, hergestellte Formkörper eine niedrigere Dichte und niedrigere Verzugsneigung gegenüber Formkörpern aus herkömmlichen Komposit-Pulvern haben. Dabei weist das erfindungsgemäße Pulver eine größere Prozesssicherheit auf als herkömmliche Komposit-Pulver; die Gefahr von Entmischungen ist deutlich reduziert.

Die aus dem erfindungsgemäßen Komposit-Pulver hergestellten Formkörper weisen dabei ähnlich gute mechanische Eigenschaften auf wie die aus herkömmlichen Komposit-Pulver hergestellten Formkörper.

Das erfindungsgemäße Komposit-Pulver wird nachfolgend beschrieben, ohne dass die Erfindung darauf beschränkt sein soll.

Das erfindungsgemäße Komposit-Pulver zum Verarbeiten in einem schichtweise arbeitenden Verfahren, bei welchem selektiv Bereiche der jeweiligen Schicht aufgeschmolzen werden, zeichnet sich dadurch aus, dass das Pulver zumindest poröse Glaskugeln und ein pulverförmiges Polymer, bevorzugt ein Polyamid, besonders bevorzugt ein Polyamid 11 oder 12, aufweist.

Die Polymerkomponente kann amorphe oder teilkristalline Polymere oder eine Mischung davon aufweisen. Als Beispiel seien genannt, ohne die Erfindung damit einzuschränken, Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), Ionomer, Polyamid, oder Gemische davon. Die Polymerkomponente wird durch Verfahren nach dem Stand der Technik, beispielsweise durch Vermahlung, Sprühtrocknen, Fällung oder andere geeignete Verfahren, in die Pulverform überführt. Anschließend kann eine Siebung oder Klassierung von Vorteil sein. Auch eine Nachbehandlung in einem Mischer mit starker Scherung, bevorzugt bei Temperaturen oberhalb des Glaspunktes des jeweiligen Polymeren, kann angeschlossen werden, um das Korn abzurunden und damit die Rieselfähigkeit zu verbessern.
Eine bevorzugte Ausführung verwendet PA11 oder PA12 oder Mischungen davon als Polymerkomponente der erfindungsgemäßen Komposit-Pulvers.

Besonders bevorzugt weist die Polymerkomponente Partikel auf, die beispielsweise durch ein Verfahren nach DE 29 06 647 B1 oder durch DE 197 08 146 erhalten werden. Das Polyamid wird in Ethanol gelöst und unter bestimmten Bedingungen auskristallisiert. Gegebenenfalls wird eine Schutzsiebung und weitere Klassierung oder Kaltmahlung angeschlossen.

Die Schüttdichte des Polymerpulvers allein liegt typischerweise zwischen 220 und 600 g/I.

Überraschenderweise wurde festgestellt, dass die Nachteile, insbesondere das Entmischen der Komponenten eines Komposit-Pulvers nach dem Stand der Technik während des Bauprozesses sowie der vor- und nachgeschalteten Pulvertransportprozesse vermieden werden können, wenn die Verstärkungskomponente poröse Glaskugeln ausweist. Damit kann der Bauprozess deutlich sicherer und reproduzierbarer ablaufen, und es können Formteile mit gleichbleibender Qualität und niedrigerer Dichte und weniger Verzugsneigung hergestellt werden.

Die Partikel des Verstärkungsstoffes sind dabei ebenso wie die Partikel der Polymerkomponente bevorzugt annähernd rund.

Der mittlere Korndurchmesser der Polymerkomponente liegt zwischen 30 und 120 µm, bevorzugt zwischen 40 und 100 µm und besonders bevorzugt zwischen 45 und 70 µm. Als besonders bevorzugte Ausführung für das Komposit-Pulver hat sich gezeigt, dass der Verstärkungsstoff einen geringeren Partikeldurchmesser als die Polymerkomponente aufweisen sollte. Bevorzugt wird ein Verhältnis mittlerer Durchmesser des Polymerkorns zu mittlerem Korndurchmesser des Verstärkungsstoffpartikels zwischen 1,5:1 und 10:1, besonders bevorzugt zwischen 1,7:1 und 5:1, und besonders bevorzugt zwischen 2:1 und 3:1.

Der Anteil an Verstärkungsstoff bezogen auf den Anteil an Polymer beträgt dabei gewichtsmäßig zwischen 1:10 bis 20:10, bevorzugt zwischen 2:10 und 15:10, und besonders bevorzugt zwischen 5:10 und 12:10.

Bei dem Verstärkungsstoff handelt es sich um poröse Glaskugeln. Sie sind auch unter dem Namen Blähglas bekannt. Bei der Herstellung wird unter Zugabe eines Blähmittels bei hoher Temperatur Granulat bzw. Partikel hergestellt. Dabei entstehen überwiegend runde Partikel mit unregelmäßiger Oberfläche, die im Innern sehr feine Porenstrukturen aufweisen. Daraus resultieren bezogen auf die Dichte verbesserte mechanische Eigenschaften gegenüber Vollglaskugeln oder Hohlglaskugeln. Für den erfindungsgemäßen Einsatz kann es vorteilhaft sein, die Blähglaspartikel zu fraktionieren. Das Schüttgewicht dieser Komponente allein liegt üblicherweise zwischen 250 und 600 g/l. Überraschenderweise wurde nun gefunden, dass diese Vorteile des Blähglases auch in einem erfindungsgemäßen Komposit-Pulver und in einem erfindungsgemäßen Prozeß sowie Formteilen erhalten bleiben können. Des weiteren führt die gute Wärmedämmung des Verstärkungsstoffes zu einer verringerten Neigung zum Curl in dem Bauprozeß.

Vorteilhaft wirkt sich die niedrige Dichte der Glaskugeln aus. Formteile für den Leichtbau können nun mit werkzeuglosen Verfahren wie oben beschrieben hergestellt werden. Damit werden neue Anwendungsfelder eröffnet. Ein weiterer Vorteil der porösen Glaskugeln ist die unregelmäßige Oberfläche.
Dadurch kann es zu einer mechanischen Verkrallung zwischen der Oberfläche und der Polymerkomponente kommen, die vorteilhaft für die mechanischen Eigenschaften ist. Glaskugeln, die in Komposit-Pulvern nach dem Stand der Technik verwendet werden, haben üblicherweise eine relativ glatte Oberfläche, keine feinteiligen Poren, sowie eine deutlich höhere Schüttdichte.

Eine Ausführungsform beeinhaltet, dass die Verstärkungskomponente des Komposit-Pulvers ein mit einer Schlichte versehenes Blähglas aufweist.

Die porösen Glaskugeln sind beispielsweise erhältlich bei der Firma Dennert Poraver GmbH in Schlüsselfeld, Deutschland.

Die Mischung der Polymerkomponente und der Verstärkungskomponente und ggfls. weiteren Hilfsstoffen erfolgt bevorzugt in einer Dry Blend-Mischung nach dem Stand der Technik.

Erfindungsgemäßes Komposit-Pulver kann außerdem Hilfsstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen Aerosil, mit unterschiedlichen Spezifikationen, durch die Degussa AG angeboten. Vorzugsweise weist erfindungsgemäßes Komposit-Pulver weniger als 3 Gew.-%, vorzugsweise von 0,001 bis 2 Gew.-% und ganz besonders bevorzugt von 0,05 bis 1 Gew.-% solcher Hilfsstoffe, bezogen auf die Summe der vorhandenen Polymere, auf. Die Pigmente können beispielsweise Titandioxidpartikel basierend auf Rutil (bevorzugt) oder Anatas sein oder Rußpartikel.

Es ist ebenso möglich, herkömmliche Polymerpulver mit erfindungsgemäßen Komposit-Pulvern zu mischen. Das Verfahren zur Herstellung solcher Mischungen kann z. B. DE 34 41 708 entnommen werden.

Zur Verbesserung der Verarbeitungsfähigkeit oder zur weiteren Modifikation des Komposit-Pulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, zugegeben werden. Vorzugsweise wird, bezogen auf das Gesamtgewicht an Polymeren im Polymerpulver, so viel dieser Stoffe den Polymeren zugegeben, dass die für das erfindungsgemäße Polymerpulver angegeben Konzentrationen für Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche der jeweiligen Schicht aufgeschmolzen werden, bei denen erfindungsgemäße Komposit-Pulver verwendet werden, welche dadurch gekennzeichnet sind, dass sie zumindest ein Polymerpulver und poröse Glaskugeln aufweisen.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm oder zwischen 800 und 1 060 nm. Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers.

Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.
Die erfindungsgemäßen Formkörper, die durch ein schichtweise arbeitendes Verfahren, bei dem selektiv Bereiche aufgeschmolzen werden, hergestellt werden, zeichnen sich dadurch aus, dass sie zumindest ein Polymer sowie einen Verstärkungsstoff, aufweisen und dass dabei die Dichte des erfindungsgemäßen Komposit-Bauteiles gegenüber einem Bauteil hergestellt aus Komposit-Pulver nach dem Stand der Technik, abgesenkt wird und die Verzugsneigung reduziert wird.

Die Formkörper können außerdem Hilfsstoffe (hier gelten die Angaben wie für das Polymerpulver), wie z. B. thermische Stabilisatoren, wie z. B. sterisch gehinderte Phenolderivate, aufweisen. Vorzugsweise weisen erfindungsgemäße Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die folgenden Beispiele sollen das erfindungsgemäße Komposit-Pulver sowie dessen Verwendung beschreiben, ohne die Erfindung auf die Beispiele einzuschränken.

Die Messwerte der Laserbeugung wurden mit dem Malvern Mastersizer S, Ver. 2.18, erhalten. Die Schüttdichte wurde mit einer Apparatur nach DIN 53466 ermittelt.
Die Erfindung soll durch die folgenden Beispiele erläutert, aber nicht eingegrenzt werden.

### Vergleichsbeispiel: Nicht erfindungsgemäßes Komposit-Pulver

100 Teile EOSINT PA2200 der Firma EOS GmbH werden in einem MTI-Mischer (500 UPM, 5 Minuten) mit 40 Teilen Glaskugeln Typ Spheriglass E-2000 der Firma Potters Ballotini gemischt. Es handelt sich dabei um kompakte Glaskugeln mit einer BET-Oberfläche unter 1m²/g und einer Körnung kleiner 100 µm, Dichte 2,5 g/cm³.

### Beispiel 1: Komposit-Pulver mit Blähglaskugeln zwischen 40 und 125 µm

100 Teile EOSINT PA2200 der Firma EOS GmbH werden in einem MTI-Mischer (500 UPM, 5 Minuten) mit 30 Teilen Blähglaskugeln Typ Poraver der Firma Denner Poraver GmbH gemischt. Es handelt sich dabei um poröse Glaskugeln mit einer Schüttdichte von 530 kg/m³ und einer Körnung zwischen 40 und 125 µm, Dichte ca. 1.0 g/cm³.

### Verarbeitung der Komposit-Pulver:

Alle Pulver wurden auf einer EOSINT P360 der Firma EOS GmbH, Krailling, verbaut. Es handelt sich um eine Lasersintermaschine. Der Bauraum wurde bis nahe an den Schmelzpunkt der jeweiligen Probe vorgeheizt. Die Parameter für den Laser, wie Geschwindigkeit, Leistung, wurden durch Ausprobieren jeweils an das Material angepaßt.

Wie aus nachfolgender Tabelle 1 zu ersehen ist, zeigen die erfindungsgemäßen Probekörper deutliche Vorteile besonders bezüglich der Dichte bei ansonsten im wesentlichen unveränderten mechanischen Eigenschaften. Die unterschiedlichen Verstärkungsgrade müssen dabei berücksichtigt werden. Bezogen auf die Bauteildichte sind die mechanischen Eigenschaften verbessert worden.
Die erfindungsgemäßen Bauteile zeigen außerdem deutlich weniger Verzug. Auch Entmischungseffekte während des Bauprozesses traten nicht auf.

**Tabelle 1**

| | **Vergleichsbeispiel** | **Beispiel 1** |
|---|---|---|
| E-Modul [N/mm] | 2959 | 2545 |
| Dichte [g/l] | 1,26 | 1,01 |
| E-modul bezogen auf die Dichte | 2348 | 2519 |
| Standardabweichung in %. E-Modul | (13 Proben) 7,5 % | (5 Proben) 2,7 % |
| | | |

## Patentansprüche

1. Komposit-Pulver zur Verwendung in einem schichtweise arbeitenden Verfahren, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel, die aus runden Glaspartikeln mit unregelmäßiger Oberfläche, die im Innern sehr feine Porenstrukturen aufweisen handelt, wobei das gewichtsbezogene Verhältnis der Blähglaspartikel zu dem des Polymerpulvers zwischen 1:10 und 20:10 liegt.

2. Komposit-Pulver nach Anspruch 1, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polyamidpulver und Blähglaspartikel aufweist.

3. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polyamid11- und/oder Polyamid12-Pulver und Blähglaspartikel aufweist.

4. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das Polymerpulver einen mittleren Korndurchmesser zwischen 30 und 120 um zeigt.

5. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das Polymerpulver einen mittleren Korndurchmesser zwischen 40 und 100 um zeigt.

6. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das Polymerpulver einen mittleren Korndurchmesser zwischen 45 und 70 um zeigt.

7. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das Verhältnis des mittleren Korndurchmessers des Polymerpulvers zu dem der Blähglaspartikel zwischen 1,5:1 und 10:1 liegt.

8. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das Verhältnis des mittleren Korndurchmessers des Polymerpulvers zu dem der Blähglaspartikel zwischen 1,7:1 und 5:1 liegt.

9. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das Verhältnis des mittleren Korndurchmessers des Polymerpulvers zu dem der Blähglaspartikel zwischen 2:1 und 3:1 liegt.

10. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das gewichtsbezogene Verhältnis der Blähglaspartikel zu dem des Polymerpulvers zwischen 2:10 und 15:10 liegt.

11. Komposit-Pulver nach einem der vorhergehenden Ansprüche, bei dem selektiv Bereiche der jeweiligen Pulverschicht durch den Eintrag elektromagnetischer Energie aufgeschmolzen werden,
**dadurch gekennzeichnet,**
**dass** das Komposit-Pulver zumindest ein Polymerpulver und Blähglaspartikel aufweist, wobei das gewichtsbezogene Verhältnis der Blähglaspartikel zu dem des Polymerpulvers zwischen 5:10 und 12:10 liegt.

12. Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird,
**dadurch gekennzeichnet,**
**dass** zumindest ein Komposit-Pulver gemäss einem der vorhergehenden Ansprüche, das ein Polymerpulver und Blähglaspartikel aufweist, verwendet wird.

13. Verfahren nach Anspruch 12,
**dadurch gekennzeichnet,**
**dass** zumindest ein Komposit-Pulver, das ein Polyamidpulver und Blähglaspartikel aufweist, verwendet wird.

14. Verfahren nach Anspruch 12,
**dadurch gekennzeichnet,**
**dass** zumindest ein Komposit-Pulver, das ein Polyamid11- und/oder Polyamid12-Pulver und Blähglaspartikel aufweist, verwendet wird.

15. Formkörper, hergestellt durch eines der Verfahren aus den Ansprüchen 12 bis 14, **dadurch gekennzeichnet,**
**dass** zumindest ein Komposit-Pulver, das ein Polymerpulver und Blähglaspartikel aufweist, verwendet wird.

16. Formkörper, hergestellt durch eines der Verfahren aus den Ansprüchen 12 bis 14,
**dadurch gekennzeichnet,**
**dass** zumindest ein Komposit-Pulver, das ein Polyamidpulver und Blähglaspartikel aufweist, verwendet wird.

17. Formkörper, hergestellt durch eines der Verfahren aus den Ansprüchen 12 bis 14,
**dadurch gekennzeichnet,**
**dass** zumindest ein Komposit-Pulver, das ein Polyamid11- und/oder Polyamid12-Pulver und Blähglaspartikel aufweist, verwendet wird.

## Claims

1. Composite powder for use in a layer-by-layer process in which regions of the respective powder layer are selectively melted via introduction of electromagnetic energy,
**characterized in that**
the composite powder comprises at least one polymer powder and expanded glass beads which are composed of round glass beads with irregular surface which have very fine pore structures in the interior, the ratio by weight of the expanded glass beads to the polymer powder being from 1:10 to 20:10.

2. Composite powder according to Claim 1, in which regions of the respective powder layer are selectively melted via introduction of electromagnetic energy,
**characterized in that**
the composite powder comprises at least one polyamide powder and expanded glass beads.

3. Composite powder according to any of the preceding claims, in which regions of the respective powder layer are selectively melted via introduction of electromagnetic energy,
**characterized in that**
the composite powder comprises at least one nylon-11 powder and/or nylon-12 powder and expanded glass beads.

4. Composite powder according to any of the preceding claims, in which regions of the respective powder layer are selectively melted via introduction of electromagnetic energy,
**characterized in that**
the composite powder comprises at least one polymer powder and expanded glass beads, the average particle diameter of the polymer powder being from 30 to 120 µm.

5. Composite powder according to any of the preceding claims, in which regions of the respective powder layer are selectively melted via introduction of electromagnetic energy,
**characterized in that**
the composite powder comprises at least one polymer powder and expanded glass beads, the average particle diameter of the polymer powder being from 40 to 100 µm.

6. Composite powder according to any of the preceding claims, in which regions of the respective powder layer are selectively melted via introduction of electromagnetic energy,
**characterized in that**
the composite powder comprises at least one polymer powder and expanded glass beads, the average particle diameter of the polymer powder being from 45 to 70 µm.

7. Composite powder according to any of the preceding claims, in which regions of the respective powder layer are selectively melted via introduction of electromagnetic energy,
**characterized in that**
the composite powder comprises at least one polymer powder and expanded glass beads, the ratio of the average particle diameter of the polymer powder to that of the expanded glass beads being from 1.5:1 to 10:1.

8. Composite powder according to any of the preceding claims, in which regions of the respective powder layer are selectively melted via introduction of electromagnetic energy,
**characterized in that**
the composite powder comprises at least one polymer powder and expanded glass beads, the ratio of the average particle diameter of the polymer powder to that of the expanded glass beads being from 1.7:1 to 5:1.

9. Composite powder according to any of the preceding claims, in which regions of the respective powder layer are selectively melted via introduction of electromagnetic energy,
**characterized in that**
the composite powder comprises at least one polymer powder and expanded glass beads, the ratio of the average particle diameter of the polymer powder to that of the expanded glass beads being from 2:1 to 3:1.

10. Composite powder according to any of the preceding claims, in which regions of the respective powder layer are selectively melted via introduction of electromagnetic energy,
**characterized in that**
the composite powder comprises at least one polymer powder and expanded glass beads, the ratio by weight of the expanded glass beads to the polymer powder being from 2:10 to 15:10.

11. Composite powder according to any of the preceding claims, in which regions of the respective powder layer are selectively melted via introduction of electromagnetic energy,
**characterized in that**
the composite powder comprises at least one polymer powder and expanded glass beads, the ratio by weight of the expanded glass beads to the polymer powder being from 5:10 to 12:10.

12. Process for the production of mouldings via a layer-by-layer process in which regions of the respective powder layer are selectively melted via introduction of electromagnetic energy, the selectivity being achieved via application of susceptors, of inhibitors, of absorbers, or via masks,
**characterized in that**
at least one composite powder according to any of the preceding claims is used which comprises a polymer powder and expanded glass beads.

13. Process according to Claim 12,
**characterized in that**
at least one composite powder is used which comprises a polyamide powder and expanded glass beads.

14. Process according to Claim 12,
**characterized in that**
at least one composite powder is used which comprises a nylon-11 powder and/or nylon-12 powder and expanded glass beads.

15. Moulding, produced via one of the processes from Claims 12 to 14,
**characterized in that**
at least one composite powder is used which comprises a polymer powder and expanded glass beads.

16. Moulding, produced via one of the processes from Claims 12 to 14,
**characterized in that**
at least one composite powder is used which comprises a polyamide powder and expanded glass beads.

17. Moulding, produced via one of the processes from Claims 12 to 14,
**characterized in that**
at least one composite powder is used which comprises a nylon-11 powder and/or nylon-12 powder and expanded glass beads.

## Revendications

1. Poudre composite destinée à être utilisée dans un procédé fonctionnant en couches, des zones de la couche de poudre respective étant fondues sélectivement par l'apport d'énergie électromagnétique, **caractérisée en ce que** la poudre composite comprend au moins une poudre polymère et des particules de verre expansé, qui sont constituées de particules de verre rondes à surface irrégulière qui comprennent à l'intérieur des structures poreuses très fines, le rapport en poids entre les particules de verre expansé et la poudre polymère étant compris entre 1:10 et 20:10.

2. Poudre composite selon la revendication 1, des zones de la couche de poudre respective étant fondues sélectivement par l'apport d'énergie électromagnétique, **caractérisée en ce que** la poudre composite comprend au moins une poudre de polyamide et des particules de verre expansé.

3. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre de polyamide 11 et/ou de polyamide 12 et des particules de verre expansé.

4. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, la poudre polymère présentant un diamètre de particule moyen compris entre 30 et 120 µm.

5. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, la poudre polymère présentant un diamètre de particule moyen compris entre 40 et 100 µm.

6. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, la poudre polymère présentant un diamètre de particule moyen compris entre 45 et 70 µm.

7. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, le rapport entre le diamètre de particule moyen de la poudre polymère et celui des particules de verre expansé étant compris entre 1,5:1 et 10:1.

8. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, le rapport entre le diamètre de particule moyen de la poudre polymère et celui des particules de verre expansé étant compris entre 1,7:1 et 5:1.

9. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, le rapport entre le diamètre de particule moyen de la poudre polymère et celui des particules de verre expansé étant compris entre 2:1 et 3:1.

10. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, le rapport en poids entre les particules de verre expansé et la poudre polymère étant compris entre 2:10 et 15:10.

11. Poudre composite selon l'une quelconque des revendications précédentes, des zones de la couche de poudre respective étant fondues sélectivement par l'apport d'énergie électromagnétique, **caractérisée en ce que** la poudre composite comprend au moins une poudre polymère et des particules de verre expansé, le rapport en poids entre les particules de verre expansé et la poudre polymère étant compris entre 5:10 et 12:10.

12. Procédé de fabrication de corps moulés par un procédé fonctionnant en couches, des zones de la couche de poudre respective étant fondues sélectivement par l'apport d'énergie électromagnétique, la sélectivité étant obtenue par l'application de suscepteurs, d'inhibiteurs, d'absorbeurs ou par des masques, **caractérisé en ce qu'**au moins une poudre composite selon l'une quelconque des revendications précédentes, qui comprend une poudre polymère et des particules de verre expansé, est utilisée.

13. Procédé selon la revendication 12, **caractérisé en ce qu'**au moins une poudre composite, qui comprend une poudre de polyamide et des particules de verre expansé, est utilisée.

14. Procédé selon la revendication 12, **caractérisé en ce qu'**au moins une poudre composite, qui comprend une poudre de polyamide 11 et/ou de polyamide 12 et des particules de verre expansé, est utilisée.

15. Corps moulé, fabriqué par un procédé selon les revendications 12 à 14, **caractérisé en ce qu'**au moins une poudre composite, qui comprend une poudre polymère et des particules de verre expansé, est utilisée.

16. Corps moulé, fabriqué par un procédé selon les revendications 12 à 14, **caractérisé en ce qu'**au moins une poudre composite, qui comprend une poudre de polyamide et des particules de verre expansé, est utilisée.

17. Corps moulé, fabriqué par un procédé selon les revendications 12 à 14, **caractérisé en ce qu'**au moins une poudre composite, qui comprend une poudre de polyamide 11 et/ou de polyamide 12 et des particules de verre expansé, est utilisée.
